# EUROPÄISCHE PATENTSCHRIFT

(11) **EP 0 734 942 B1**
(45) Veröffentlichungstag und Bekanntmachung des Hinweises auf die Patenterteilung: **12.01.2000**
(21) Anmeldenummer: 96104678.6
(22) Anmeldetag: 25.03.1996
(51) Int. Cl.: B62H 3/12

(54) **Hebeeinrichtung**
Lifting apparatus
Dispositif de levage

(30) Priorität: 27.03.1995 CH 88595
(43) Veröffentlichungstag der Anmeldung: 02.10.1996
(73) Patentinhaber: Fankhauser, Daniel, 6312 Steinhausen (CH)
(72) Erfinder: Fankhauser, Daniel, 6312 Steinhausen (CH)
(74) Vertreter: Hotz, Klaus, Dipl.-El.-Ing./ETH Patentanwalt

(56) Entgegenhaltungen:
- CH-A- 664 332
- DE-A- 2 458 502
- DE-A- 4 209 007

## Beschreibung

Die Erfindung betrifft eine Hebeeinrichtung nach dem Oberbegriff des Patentanspruchs 1.

Zweiräder, insbesondere Fahrräder und Fahrräder mit Hilfsmotoren, werden an verschiedensten Orten zeitweilig abgestellt und aufbewahrt. Uebliche häusliche Abstellmöglichkeiten bieten sich in Kellern, Autoeinstellhallen und -garagen sowie in Abstellräumen, die eigens für Fahrräder, Kinderwagen und ähnliche Geräte vorgesehen sind. Bei Schulen und Geschäften werden Zweiräder auch häufig in Freien abgestellt. Die Notwendigkeit zur Aufbewahrung von Zweirädern besteht auch bei Bahnhöfen, sei es, dass die Zweiräder als Zubringermittel dienen, sei es, dass sie im Verlauf eines Bahntransportes zwischengelagert werden. Schliesslich besteht auch bei Fahrradhändlern und -reparaturwerkstätten der Bedarf, Fahrräder in beträchtlicher Zahl zu lagern.

Vielerorts werden Zweiräder an Gebäuden, Zäunen und Bäumen angelehnt oder mittels eigener, ausklappbarer Stützen abgestellt. Um Platz zu sparen und die Zweiräder geordnet aufzubewahren, sind meistens Ständer vorhanden. Insbesondere werden an Orten, wo eine gewisse Platzknappheit herrscht, Zweiräder bodenfern so aufbewahrt, dass sie möglichst wenig Stellfläche benötigen. Neben einfachen Deckenhaken, an welchen die Zweiräder mit ihrem Vorderrad eingehängt werden können, sind seit langem Ständer bekannt, bei welchen man die Zweiräder in schrägen, unten etwa halbkreisförmig abgewinkelten Führungsschienen nach oben schiebt. In den verschiedenen Einrichtungen zum platzsparenden Aufbewahren von Zweirädern können diese einzeln, in Reihen oder radial in Kreisen gelagert werden. Da das Anheben oder Hinaufschieben von Zweirädern in bodenferne Einrichtungen als beschwerlich empfunden wird, werden zu diesem Zweck seit einiger Zeit Hebeeinrichtungen mit Hiltsmitteln wie beispielsweise Federn verwendet. Dabei sind die Hebeeinrichtungen gelegentlich so ausgebildet, dass sie nicht nur ein Hilfsmittel sondern im wesentlichen den Zweiradständer selbst bilden.

Eine solcher Zweiradständer bzw. eine solche Hebevorrichtung wird in der **DE-24 58 502** beschrieben. Von dieser Hebeeinrichtung sind zwei verschiedene Ausführungsformen bekannt: in ihrer ersten Ausführungsform wird sie an einer Wand befestigt, wobei zur Aufbewahrung mehrerer Zweiräder mehrere Hebeeinrichtungen nebeneinander montiert werden können; in ihrer zweiten Ausführungsform bildet die Hebeeinrichtung zusammen mit weiteren, gleichen Hebeeinrichtungen einen freistehenden Käfig in der Form eines Zylinders oder Kegelstumpfes, an dessen Aeusserem die Zweiräder aufgenommen sind. Die vorbekannte Hebeeinrichtung weist einen länglichen Träger auf, der an seinem einen Ende ein Aufnahmelelement wie beispielsweise einen Haken besitzt. Das andere Ende des Trägers ist am einen Hebelarm eines zweiarmigen Hebels befestigt, der seinerseits mit seiner Drehachse an einer Struktur angelenkt ist. Der zweite Hebelarm des Hebels ist gelenkig mit einem ersten Ende einer Feder verbunden, deren zweites Ende ebenfalls an der Struktur angelenkt ist. Durch die Kraft der Feder auf den Hebel entsteht ein Drehmoment, durch das der Träger aus einer Beschickungslage, in welcher eines der Räder des Zweirades am Aufnahmeelement befestigt wird, in eine Silolage geschwenkt wird, in welcher das Zweirad annähernd vertikal aufbewahrt ist. Die Federkraft F ist in der Beschickungslage maximal und nimmt gegen die Silolage ab, während der Abstand a der Wirkungslinie der Federkraft von der Drehachse gegen die Silolage zunimmt. Die Charakteristik der Feder und die geometrische Konfiguration sind so aufeinander abgestimmt, dass das Drehmoment, welches sich nach der Formel M = a mal F berechnet, in der Beschickungslage grösser als Null ist und gegen die Silolage hin zunimmt. Dies hat zur Folge, dass die Hebeeinrichtung in der Beschickungslage verriegelt werden muss, weil sie sich sonst selbsstätig in die Silolage verstellen würde, so dass es ohne eine die Verriegelungsvorrichtung gar nicht möglich wäre, das Zweirad in richtiger Lage in die Hebeeinrichtung zu bringen.

Die Notwendigkeit, eine solche Verriegelungsvorrichtung vorzusehen, muss aus verschiedenen Gründen als Nachteil der bekannten Hebeeinrichtung betrachtet werden. Erstens ist der herstellungsmässige Aufwand grösser, zweitens wird die Benützung der Hebeeinrichtung komplizierter und drittens unterliegen Elemente wie solche Verriegelungsvorrichtungen einer besonders intensiven Abnützung.

Ein weiterer Nachteil dieser Hebevorrichtung besteht darin, dass das Aufnahmeelement für das Zweirad in der Silolage nicht mindestens annähernd vertikal sondern seitlich verschoben, und zwar trägerseitig, oberhalb des Anlenkpunktes des Hebels angeordnet ist. Dies hat zur Folge, dass in der Sililage stets ein beträchtliches Drehmoment wirkt, welches das Bestreben hat, das Zweirad in die Beschickungslage zu drehen, sodass, um dies zu verhindern, die Feder in der Silolage ein verhältnismässig starkes Drehmoment ausüben muss.

Bekannt ist im sodann aus der **CH-664 332** eine Hebeeinrichtung der eingangs genannten Art. Das Aufnahmeelement dieser Hebeeinrichtung besteht aus einem Träger, der senkrecht zur Schwenkebene gerichtet ist und an seinen Enden je ein Aufnahmeglied besitzt. Diese Aufnahmeglieder sind dazu bestimmt, an zwei Rahmenrohren des Rahmens des anzuhebenden Zweirades anzugreifen. Das Zweirad wird in einer Stellung angehoben, in der seine Längsmittelebene senkrecht zur vertikalen Schwenkebene gerichtet ist. Diese Hebeeinrichtung weist drei Nachteile auf: erstens müssen die Aufnahmeglieder auf den Rahmen des anzuhebenden Zweirades abgestimmt sein, was in den wenigsten Fällen zutreffen dürfte, zweitens ist der Platzbedarf für die anzuhebenden und angehobenen Zweiräder sehr gross und drittens ist die Feder in der Silolage sehr stark gespannt.

Demzufolge wird die Aufgabe der Erfindung darin gesehen, ausgehend von einem Stand der Technik gemäss der **CH-664 332** eine verbesserte Hebevorrichtung vorzuschlagen, bei weicher der Platzbedarf für die Zweiräder gering ist und bei welcher die Feder in der Silolage nur minimal belastet ist.

Diese Aufgabe wird erfindungsgemäss durch die Merkmale des kennzeichnenden Teils des Patentanspruchs **1** gelöst.

Vorteilhafte Weiterbildungen und Ausführungsformen der erfindungsgemässen Hebevorrichtungen werden durch die Merkmale der abhängigen Patentansprüche definiert.

Die neue Hebeeinrichtung vermeidet sowohl die Nachteile der **CH-664 332** wie auch die Nachteile der **DE-24 58 502**.

Anders als bei den beiden erwähnten vorbekannten Hebeeinrichtungen ist bei der erfindungsgemässen Hebeeinrichtung die Feder in der Sololage kaum belastet.

Im Gegensatz zur Hebeeinrichtung gemäss der **CH-644 322** weist bel der erfindungsgemässen Hebeeinrichtung das Aufnahmeelement nur ein Einzelglied auf, weiches dazu bestimmt ist, in einen im Peripheriebereich liegenden Durchbruch eines Rades, im allgemeinen zwischen Speichen eines Rades, einzugreifen. Dieses Einzelglied kann praktisch für alle Zweiradtypen verwendet werden. Im weiteren nimmt das Zweirad während seiner Hebung und in der Silolage eine platzsparende Stellung ein, da seine Längsmittelebene sich in der Schwenkebene oder parallel zur Schwenkebene befindet. Aussderdem ist bei der neuen Hebeeinrichtung die Feder in der Silolage nur minimal belastet.

Bei der Hebeeinrichtung gemäss der **DE-24 58 502** gelangt der Träger aus der Silolage in die Beschickungslage, indem er um den Winkel alfa geschwenkt wird, wobei sich die Feder während der gesamten Verschwenkung des Trägers verlängert und das auf den Träger wirkende Drehmoment stets im gleichen Drehsinn wirkt. Im Gegensatz dazu gelangt der Träger bei der erfindungsgemässen Hebeeinrichtung, wie auch bei der Hebeeinrichtung gemäss der **CH-664 332**, aus der Silolage in die Beschickungslage, indem er um den Winkel gamma geschwenkt wird; dieser Winkel gamma ist aber so gross, dass sich die als Druckfeder ausgebildete Feder nur während eines ersten Teils der Verschwenkung verkürzt und damit spannt, sich dann aber - nachdem der Träger eine Grenzlage passiert hat, während eines zweiten Teils der Verschwenkung wieder verlängert; wenn der Träger die Grenzlage einnimmt, ist die Feder am kürzesten und damit am meisten gespannt; dennoch ist das Drehmoment dort null, weil der Abstand der Wirkungslinie der Federkraft zum Drehpunkt null ist. Das Drehmoment ändert seinen Drehsinn, sobald der Träger die Grenzlage passiert. Wenn sich der Träger zwischen der Grenzlage und der Beschickungslage oder in der Beschickungslage befindet, wirkt somit wieder ein Drehmoment - allerdings im umgekehrten Drehsinn - auf ihn, das ihn auf die Silolage vorspannt. Das in der Beschickungslage ant den Träger wirkende Drehmoment ist dabei so klein, dass es durch das Gewicht des Trägers und des Hebels und durch die Reibung kompensiert wird. Der Träger verbleibt also ohne zusätzliche Verriegelung in der Beschickungslage. Es sei noch angemerkt, dass theoretisch bereits die Grenzlage die Beschickungslage bilden könnte, was aber aus praktischen Gründen nicht realisierbar ist, da die Grenzlage eine instabile Lage des Trägers ist.

Um den Träger zusammen mit einem Zweirad aus der Beschickungslage in die Silolage zurückzuschwenken, ist eine leichte manuelle Hilfe nötig, wobei die Feder auf ihre maximale Länge gedehnt und der Träger in oder vorzugsweise um ein weniges über die Grenzlage hinaus gebracht wird, von wo aus er durch die Kraft der Feder in die Silolage angehoben wird.

Die Wirkungsweise der erfindungsgemässen Vorrichtung beruht auf einer speziellen geometrischen und mechanischen Konfiguration, wozu beispielsweise eine gekröpfte bzw. S-artige Form eines Arms des Hebel vorgesehen werden kann.

Die Hebeeinrichtung ist an Federn mit verschiedenen Charakteristiken und/oder an Zweiräder mit verschiedenen Gewichten anpassbar, wenn der Hebel mehrere Bohrungen aufweist, in welchen das freie Ende der Feder einhängbar ist.

Man nützt, wie schon erwähnt, die Reibungskraft und das Gewicht des Trägers aus, um zu verhindern, dass sich der Träger aus der Silolage weiter als in die Beschickungslage dreht. Da die gegenseitige Abstimmung der dabei wirkenden Kräfte schwierig ist, wird bei einer verbesserten Ausbildungsform der Hebeeinrichtung ein Anschlag zur Begrenzung des Verschwenkungsweges des Hebels an der Struktur vorgesehen, durch welchen die Beschickungslage des Trägers definiert ist.

Um die Bedienung der Hebeeinrichtung zu erleichtern und deren vorzeitige Abnützung zu verhindern, wird der Hebel vorzugsweise mittels eines Wälzlagers, insbesondere eines Kugellagers, an der Struktur angelenkt.

Die Struktur, an weicher nebst dem Hebel auch die Feder angelenkt ist, kann aus einer annähernd dreieckförmigen Platte bestehen, die Flansche besitzt, mittels weichen sie an einer Wand befestigbar ist. Damit erhält man eine Hebevorrichtung für ein einzelnes Zweirad.

Um eine Vielzahl von Zweirädern platzsparend unterzubringen, kann die Struktur auch so ausgebildet sein, dass sie einen Sektor eines Käfigs bildet, der im wesentlichen die Form eines aufrechten Zylinders oder Kegelstumpfes hat, und bei weichem auch die weiteren Sektoren durch weitere, gleiche Hebeeinrichtungen gebildet sind.

Bei knappen Raumverhältnissen ist es besonders praktisch, wenn sich der Käfig um eine vertikale Mittelachse drehen lässt. Damit diese Drehung auch bei einem schweren, mit vielen Zweirädern gefüllten Käfig leicht bewerkstelligt werden kann, wird der Käfig vorteilhaft über Wälzlager abgestützt.

Eine stabile Anordnung der Zweiräder in einem solchen Käfig erhält man, wenn die Strukturen nach aussen offene Aufnahmerinnen mit U-Profilen aufweisen, welche sich entlang von Mantellinien des Zylinders oder Kegelstumpfes des Käfigs erstrecken.

Die U-Profile der Aufnahmerinnen können Bereiche aufweisen, in denen ihre Schenkel auseinendergespreizt sind.

Um die Zweiräder möglichst platzsparend an einem solchen Käfig anzuordnen, muss ein drehbares Pedalpaar in eine Stellung gebracht werden, in der sich ein Pedal vorne und ein Pedal hinten befindet, wobei die Angaben 'vorne' und 'hinten' immer mit Bezug auf eine normale Fortbewegungsrichtung eines Zweirades verstanden werden sollen. Zu diesem Zwecke kann jede Struktur einen Stellkörper aufweisen.

Zur Verhinderung von Diebstählen kann das Aufnahmelement so ausgebildet werden, dass es gesichert werden kann.

Solche Sicherungsvorrichtungen können so ausgebildet sein, dass sie mit Vorhängesohlössern, die die Zweiradfahrer mitbringen, zu benützen sind. Sie können auch Schlüssel aufweisen, die nach Einwurf von Münzen oder Jetons durch einen Mechanismus freigegeben und mitgenommen werden können. Die Münzen oder Jetons können als Schlüssedepot betrachtet und bei der Rücknahme der Zweiräder zurückerstattet werden, es ist aber auch möglich, sie einzubehalten und damit eine Parkgebühr zu erheben.

Im folgenden wird die Erfindung anhand von Ausführungsbeispielen und mit Bezug auf die Zeichnung ausführlich beschrieben. Es zeigt:
- **Fig. 1**: eine erste Ausführungsform einer erfindungsgemässen Hebeeinrichtung, von vorne;
- **Fig. 2**: die in Fig. 1 dargestellte Hebeeinrichtung, von der Seite;
- **Fig. 3**: die Befestigung des Trägers und des Hebels an der Struktur, in einem vertikalen Schnitt;
- **Fig. 4**: die in Fig. 1 dargestellte Hebeeinrichtung, wobei der Träger und der Hebel sowohl in der Silolage wie auch in der Beschickungslage dargestellt sind, von der Seite;
- **Fig. 5**: zwei erfindungsgemässe Hebevorrichtungen in einer zweiten Ausführungsform, deren Strukturen einen Käfig bilden, in einer vereinfachten Darstellung, von der Seite;
- **Fig. 6**: den in Fig. 5 dargestellten Käfig, von oben;
- **Fig. 7**: eine Aufnahmerinne, von aussen; und
- **Fig. 8**: die in Fig. 7 dargestellte Aufnahmerinne, in einem Schnitt längs der Linie A-A der Fig. 7.

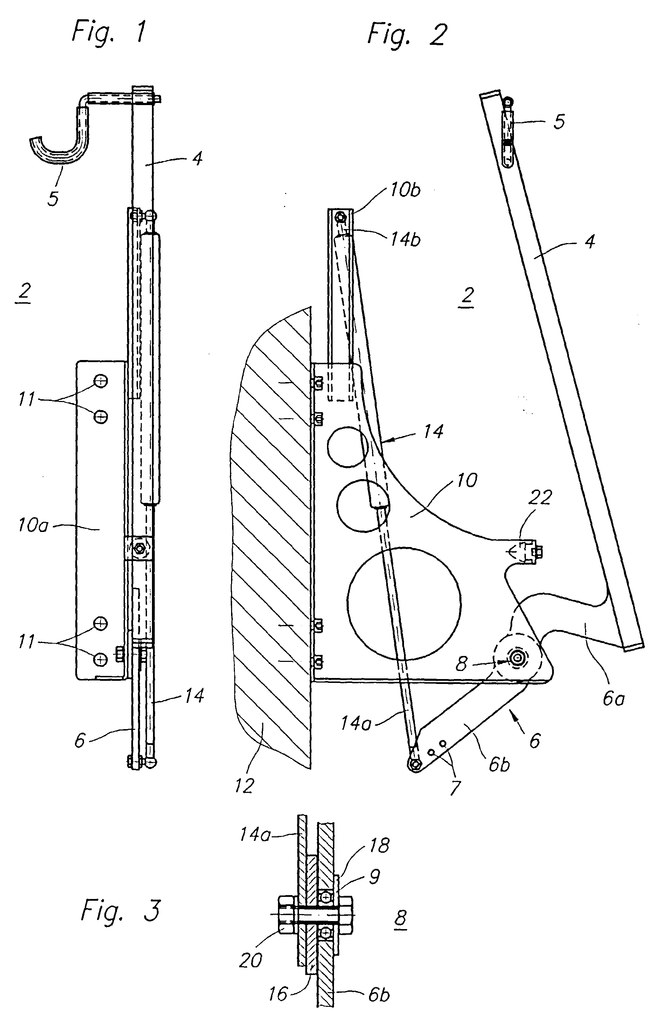

Die in **Fig. 1** und **Fig. 2** dargestellte Hebeeinrichtung **2** befindet sich in ihrer Silolage und weist einen Träger **4** mit einem Aufnahmelement **5** auf, das die Form eines Hakens hat und dazu bestimmt ist, zwischen die Speichen eines der Räder eines Zweirades zu greifen. Das Aufnahmelement **5** ist schwenkbar am Träger **4** befestigt und vorzugsweise aus Kunststoff hergestellt oder mit einer Kunststoffhülle versehen, um eine Beschädigung des Rades zu verhindern. Der Träger **4** ist starr mit einem etwa S-förmig gebogenen Arm **6a** eines zweiarmigen Hebels **6** verbunden und bildet dadurch gewissermassen eine Verlängerung des Armes **6a**. Der Hebel **6** ist mittels einer Befestigungsvorrichtung **8**, die ein Wälzlager **9** enthält, an einer Struktur **10** befestigt, welche duch eine annähernd dreieckige Platte gebildet wird. Diese Platte weist einen Flansch **10a** auf, über den sie mit Hilfe von Schrauben **11** an einer Wand **12** befestigt ist. Der andere Arm **6b** des Hebels **6** ist an einem freien Ende **14a** einer Feder **14** angelenkt. Der Arm **6b** kann Ausnehmungen **7** aufweisen, in welchen die Feder **14** alternativ befestigbar ist. Die Feder **14** ist eine Druckfeder; sie ist in der Silolage maximal lang und damit minimal gespannt bzw. völlig entspannt. Die Feder **14** ist im vorliegenden Ausführungsbeispiel eine Gasfeder. Das andere Ende **14b** der Feder **14** ist an einem Ansatz **10b** der Struktur **10** angelenkt. An der Struktur **10** ist im weiteren ein Anschlag **22** befestigt, der einen Kunststoff- oder Gummikopf aufweist; die Funktion dieses Anschlages **22** wird später erläutert.

**Fig. 3** zeigt die die Befestigungsvorrichtung **8** mit dem Wälzlager **9**. Der Arm **6b** des Hebels **6**, das freie Ende **14a** der Feder **14**, das Wälzlager **9** sowie zwei Scheiben **16** und **18** werden mittels einer Schraube **20** zusammengehalten.

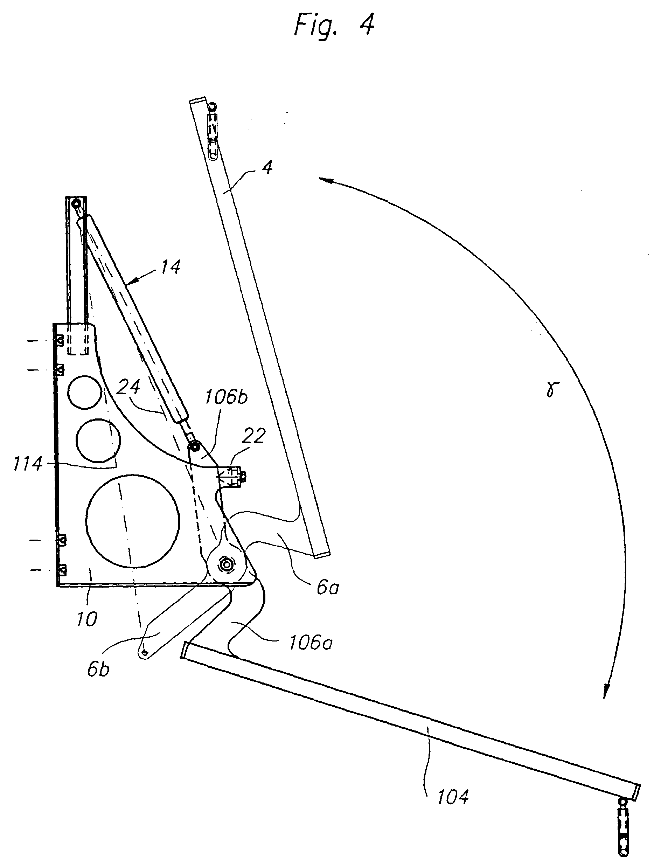

Die Wirkungsweise der bisher beschriebenen Bauteile der Hebeeinrichtung **2** ist aus **Fig. 4** ersichtlich; Bauteile, die in einer anderen Lage dargestellt sind als in **Fig. 2**, sind mit um **100** erhöhten Ueberweisungszeichen bezeichnet. Man erkennt die ortsfeste Struktur **10** sowie den Träger **4** und den Hebel **6** in der Silolage. Im weiteren sind die der Träger, der Hebel und die Feder in der Beschickungslage dargestellt, wobei der Hebel und der Träger gegenüber der Siloanlage um den Winkel gamma im Uhrzeigersinn - gesehen in **Fig. 4** - verdreht sind. In der Beschickungslage sind der Träger mit **104**, der Hebel mit **106** und die nur durch eine Linie angedeutete Feder mit **114** bezeichnet. Eine strichpunktierte Linie **24**, welche die Anlenkungspunkte des Hebels **6** bzw. **106** und der Feder **14** bzw. **114** an der Struktur **10** verbindet, stellt vereinfacht dar, wo der Hebel und die Feder angeordnet sind, wenn sich die Hebeeinrichtung **2** und damit der Träger **4** in ihrer Grenzlage befinden, in welcher die Feder **14** minimal lang und damit maximal gespannt ist. Man erkennt deutlich, dass sich die Beschickungslage des Arms, in der er mit **106b** bezeichnet ist, und die Silolage des Arms, in der er mit **6b** bezeichnet ist, auf entgegengesetzten Seiten der Linie **24** befinden. Das auf den Träger wirkende Drehmoment, das ihn auf die Silolage vorspannt, wirkt - in **Fig. 4** gesehen - im Uhrzeigersinn, wenn der Träger, der Hebel und die Zugfeder die mit **104**, **106** und **108** bezeichnete Beschickungslage oder eine Lage zwischen der Grenzlage und der Beschickungslage einnehmen. Dies hat zur Folge, dass sich der Träger aus der Beschickungslage, wo er mit **104** bezeichnet ist, nicht selbsttätig im Gegenuhrzeigersinn in die Silolage verschwenken kann. Um zu verhindern, dass sich der Träger **104** im Uhrzeigersinn weiter als in die Beschickungslage dreht, ist der bereits erwähnte Anschlag **22** vorgesehen, an welchem der Hebel **106** in der Beschickungslage-anliegt; damit begrenzt der Anschlag **22** die Drehung der beweglichen Bauteile im Uhrzeigersinn und definiert dadurch die Beschickungslage.

Um ein Zweirad mit der Hebevorrichtung anzuheben, wird es mit einem seiner Räder an die Aufnahmevorrichtung **105** gehängt. Sodann wird das Zweirad leicht nach hinten bzw. - in **Fig. 4** gesehen nach rechts - gezogen, bis die Feder **14** bzw. **114** und der Hebel **6** bzw. **106** die durch die Linie **24** angedeutete Grenzlage erreicht bzw. um ein weniges überschritten haben. Von da weg wirkt das Drehmoment im Gegenuhrzeigersinn und das Zweirad gelangt dadurch in die Silolage. Um das Zweirad aus der Hebeeinrichtung **2** zu entnehmen, muss es gegen die Kraft der Feder **14** heruntergezogen werden, was aber nicht beschwerlich ist, da man dabei durch die Wirkung der Schwerkraft unterstützt wird.

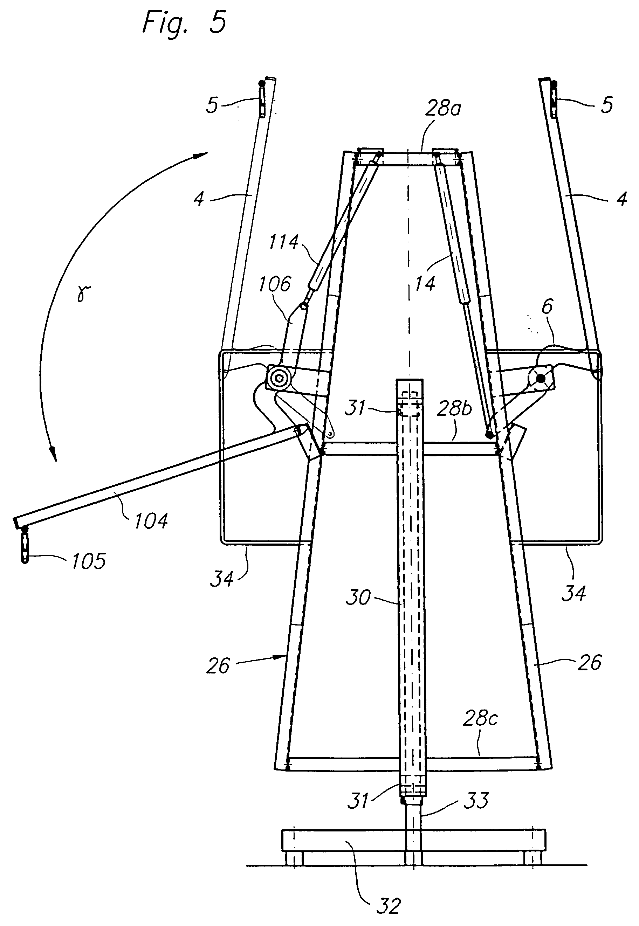

**Fig. 5** zeigt zwei Hebeeinrichtungen **2** nach der Erfindung, deren Ausbildung und Wirkungsweise im wesentlichen so ist, wie es mit Bezug auf die **Fig. 1** bis **4** beschrieben worden ist. Die Strukturen **10** bestehen hier aber nicht aus Platten, sondern sie bilden jeweils Sektoren eines Käfigs, der im wesentlichen die Form eines Kegelstumpfes aufweist. Der Käfig in Form eines Kegelstumpfes besitzt Aufnahmerinnen **26**, die längs der Mantellinien des Kegelstumpfes verlaufen und dazu bestimmt sind, eine stabile Halterung für die Räder der Zweiräder zu bilden. Der Käfig weist radiale Stege **28a**, **28b**, **28c** in drei verschiedenen Höhen und ein zentrales Rohr **30** auf, welches an den Stegen **28b**, **28c** befestigt ist. Ueber dieses Rohr **30** ist der Käfig drehbar auf einer Welle **33** eines Ständers **32** abgestützt. Er kann auch - in nicht dargestellter Weise - zwischen Boden und Decke eines Raumes festgespannt sein kann. Das Rohr **30** ist über Wälzlager **31** an der Welle **33** gelagert. Um die Zweiräder möglichst nahe an die Mittelachse des Käfigs zu bringen und so möglichst platzsparend zu lagern, weist die Struktur **10** einen Stellkörper **34** auf, der dazu dient, die beiden Pedale eines Pedalpaares in eine vordere bzw. hintere Lage zu bringen, wobei sich 'vorne' und 'hinten' auf die übliche Richtung der Vorwärtsbewegung der Zweiräder beziehen.

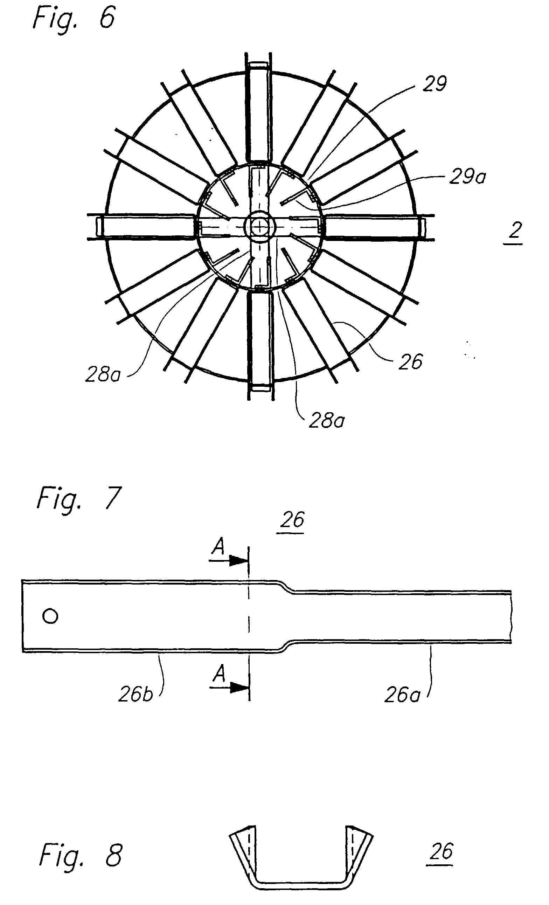

In **Fig. 6** ist der Käfig, der durch die Strukturen **10** gebildet wird, in einer Ansicht von oben dargestellt. Man erkennt die Stege **28a**, welche durch einen Kranz **29** verbunden sind, an dem Trägern **29a** befestigt sind. Diese Träger **29a** dienen dazu, die Federn **14** am Käfig anzulenken. Im weiteren sind die Aufnahmerinnen **26** dargestellt.

**Fig. 7** und **Fig. 8** zeigen eine der Aufnahmerinne **26** deutlicher. Der Querschnitt der Aufnahmerinne **26** ist im wesentlichen U-förmig, wobei die Schenkel in einem Bereich **26a** parallel verlaufen und in einem weiteren Bereich **26b** auseinandergespreizt sind.

Die dargestellten und beschriebenen Ausführungsbeispiele stellen nur eine kleine Auswahl aus den möglichen Ausführungsformen der erfindungsgemässen Hebevorrichtung dar, mit weicher im übrigen Zweirädern sondern auch andere Gegenstände angehoben und zeitweilig versorgt werden können.

## Patentansprüche

1. Hebeeinrichtung (**2**) zum Heben eines Zweirades aus einer Beschickungslage in eine Silolage, mit einem Träger (**4**), welcher an seinem einen Ende ein zur Aufnahme des Zweirades bestimmtes Aufnahmeelement (**5**) aufweist und mit seinem anderen Ende starr an einem ersten Arm (**6a**) eines mit seinem Drehpunkt an einer Struktur (**10**) angelenkten Hebels (**6**) befestigt ist, dessen anderer Arm (**6b**) am freien Ende (**14a**) einer Feder (**14**) angelenkt ist, deren unfreies Ende (**14b**) an der Struktur (**10**) angelenkt ist, wobei der Träger (**4**) aus der Silolage, in der die Spannung der Feder (**14**) minimal ist, in eine Grenzlage, in der die Spannung der Feder (**14**) maximal ist, und unter Verminderung der Spannung der Feder (**14**) weiter in eine verriegelungsfreie Beschickungslage schwenkbar ist,
**dadurch gekennzeichnet,**
dass das Aufnahmeelement (**5**) durch ein Einzelglied gebildet ist, welches dazu bestimmt ist, in eines der Räder des Zweirades einzugreifen, um das Zweirad mit in der oder parallel zur Schwenkebene des Trägers (**4**) und des Hebels (**6**) liegender Längsmittelebene in die Silolage zu heben, wobei in der Silolage das Aufnahmeelement (**5**) annähernd vertikal oberhalb des Drehpunktes des Hebels (**6**) angeordnet ist, damit das vom Gewicht des Zweirades auf den Hebel (**6**) ausgeübte Drehmoment minimal ist.

2. Hebeeinrichtung (**2**) nach Patentanspruch **1**,
**dadurch gekennzeichnet,**
dass der am Träger befestigte Arm (**6a**) des Hebels (**6**) annähernd S-förmig gekrümmt ist.

3. Hebeeinrichtung (**2**) nach Patentanspruch **1**,
**dadurch gekennzeichnet,**
dass der an der Feder (**14**) angelenkte Arm (**6b**) des Hebels (**6**) mindestens eine Ausnehmung (**7**) aufweist, zur alternativen Befestigung der Feder (**14**).

4. Hebeeinrichtung (**2**) nach Patentanspruch **1**,
**dadurch gekennzeichnet,**
dass die Struktur (**10**) einen Anschlag (**22**) aufweist, um die Beschickungslage zu definieren.

5. Hebeeinrichtung (**2**) nach Patentanspruch **1**,
**dadurch gekennzeichnet,**
dass die Struktur (**10**) an einer Wand (**12**) befestigbar ist.

6. Hebeeinrichtung (**2**) nach Patentanspruch **1**,
**dadurch gekennzeichnet,**
dass die Struktur (10) durch einen Sektor eines Käfigs in der Art eines Kegels oder Zylinders gebildet ist, dessen weitere Sektoren je eine weitere Hebevorrichtung (**2**) aufweisen.

7. Hebeeinrichtung (**2**) nach Patentanspruch **6**,
**dadurch gekennzeichnet,**
dass der Käfig um eine vertikale Drehachse drehbar ist.

8. Hebeeinrichtung (**2**) nach Patentanspruch **7**,
**dadurch gekennzeichnet,**
dass der Käfig ein in seiner Achse verlaufendes Rohr (**30**) besitzt, das über Wälzlager (**31**) an einer Welle (**33**) eines Ständers (**32**) abgestützt ist.

9. Hebeeinrichtung (**2**) nach Patentanspruch **6**,
**dadurch gekennzeichnet,**
dass die Strukturen (**10**) Aufnahmerinnen (**26**) mit einem U-Profil aufweisen, welche sich entlang von Mantellinien des Kegels oder Zylinders erstrecken und zur Aufnahme von je einem Räderpaar eines Zweirades bestimmt sind.

10. Hebeeinrichtung (**2**) nach Patentanspruch **6**,
**dadurch gekennzeichnet,**
dass die Aufnahmerinnen (**26**) Bereiche (**26b**) aufweisen, in denen ihre Schenkel auseinandergespreizt sind.

## Claims

1. Lifting apparatus (2) for lifting a two-wheeled vehicle out of a loading position into a silo position, having a bracket (4) which at one end has a locating element (5) designed to locate the two-wheeled vehicle and which by its other end is rigidly attached to a first arm (6a) of a lever (6) hinged by its fulcrum point on a structure (10), the other arm (6b) thereof being hinged on the free end (14a) of a spring (14) whose captive end (14b) is hinged on the structure (10), the bracket (4) being adapted to be swivelled out of the silo position in which the tension of the spring (14) is at its minimum, into a boundary position in which the tension of the spring (14) is at its maximum, and thence into an unlocked loading position, accompanied by a reduction in the tension of the spring (14),
characterised in that
the locating element (5) is formed by an individual member which is designed to engage in one of the wheels of the two-wheeled vehicle in order to lift the two-wheeled vehicle into the silo position with the median longitudinal plane situated in or parallel to the swivelling plane of the bracket (4) and of the lever (6), in the silo position the locating element (5) being arranged approximately vertically above the fulcrum point of the lever (6) so that the torque exerted on the lever (6) by the weight of the two-wheeled vehicle is minimised.

2. Lifting apparatus (2) according to claim 1,
characterised in that the arm (6a) of the lever (6) which is attached to the bracket is curved approximately in the shape of an S.

3. Lifting apparatus (2) according to claim 1,
characterised in that the arm (6b) of the lever (6) which is hinged on the spring (14) incorporates at least one recess (7) as an alternative means of attaching the spring (14).

4. Lifting apparatus (2) according to claim 1,
characterised in that the structure (10) incorporates a limit stop (22) in order to define the loading position.

5. Lifting apparatus (2) according to claim 1,
characterised in that the structure (10) is adapted to be attached to a wall (12).

6. Lifting apparatus (2) according to claim 1,
characterised in that the structure (10) is formed by one sector of a cage in the manner of a cone or cylinder, the remaining sectors of which incorporate further lifting apparatus (2) in each case.

7. Lifting apparatus (2) according to claim 6,
characterised in that the cage is adapted to rotate about a vertical axis of rotation.

8. Lifting apparatus (2) according to claim 7,
characterised in that the cage has a tube (30) which runs along the axis thereof and which is supported by means of rolling bearings (31) on a shaft (33) of a stand (32).

9. Lifting apparatus (2) according to claim 6,
characterised in that the structures (10) incorporate U-section locating channels (26) which extend along generating lines of the cone or cylinder and are designed to receive a respective pair of wheels of a two-wheeled vehicle.

10. Lifting apparatus (2) according to claim 6,
characterised in that the locating channels (26) incorporate areas (26b) in which their side-members are splayed outwards.

## Revendications

1. Dispositif do levage (2) servant à soulever une bicyclette depuis une position do chargement dans une position de rangement, comportant un support (4) qui possède au niveau do l'une do ses extrémités un élément de réception (5) destiné à recevoir la bicyclette, et qui, à son autre extrémité, est fixé rigidement à un premier bras (6a) d'un levier (6) articulé par son point do rotation sur une structure (10) et dont l'autre bras (6b) est articulé sur l'extrémité libre (14) d'un ressort (14), dont l'extrémité non libre (14b) est articulée sur la structure (10), le support(4) pouvant basculer depuis la position de rangement, dans laquelle la tension du ressort (14) est minimale, dans une position limite, dans laquelle la tension du ressort (14) est maximale, et pouvant continuer à pivoter, avec une réduction de la tension du ressort (14), pour venir dans une position de chargement non verrouillée;
caractérisé en ce
que l'élément de réception (5) est formé par un organe individuel qui est adapté pour s'engager dans l'une des roues de la bicyclette, do manière à soulever la bicyclette pour l'amener dans la position rangée, avec le plan médian longitudinal confondu ou parallèle au plan de pivotement du support (4) et du levier (6), auquel cas, dans la position de rangement, l'élément de réception (5) est disposé approximativement verticalement au-dessus du point de rotation du levier (6) afin que le couple exercé par le poids de la bicyclette sur le levier (6) soit minimal.

2. Dispositif de levage (2) selon la revendication 2, caractérisé on ce que le bras (6a), qui est fixé sur le support, du levier (6) est recourbé approximativement en forme de S.

3. Dispositif de levage (2) selon la revendication 1, caractérisé en ce que le bras (6a), qui est articulé sur le ressort (14), du levier (6) possède au moins un évidement (7) permettant la fixation alternative du ressort (14) .

4. Dispositif de levage (2) selon la revendication 1, caractérisé en ce que la structure (10) comporte une butée (22) servant à définir la position de chargement.

5. Dispositif de levage (2) selon la revendication 1, caractérisé en ce que la structure (10) peut être fixée sur une paroi (12).

6. Dispositif de levage (2) selon la revendication 1, caractérisé en ce que la structure (10) est formée par un secteur d'une cage réalisée sous la forme d'un cône ou d'un cylindre, dont d'autres secteurs comportent chacun un autre dispositif de levage (2).

7. Dispositif do levage (2) selon la revendication 6, caractérisé en ce que la cage peut tourner autour d'un axe de rotation vertical.

8. Dispositif de levage (2) selon la revendication 7, caractérisé en ce que la cage possède un tube (30) qui s'étend suivant son axe et qui est supporté au moyen de paliers à rouleaux (31) par un arbre (33) d'un montant (32).

9. Dispositif de levage (2) selon la revendication 6, caractérisé en ce que les structures (10) comportent des goulottes de réception (26) possédant un profil en U, qui s'étendent le long de génératrices du cône ou du cylindre et sont destinés à recevoir chacune une paire de roues d'une bicyclette.

10. Dispositif do levage (2) selon la revendication 6, caractérisé en ce que les goulottes de réception (26) comportent des parties (26b) dans lesquelles leurs branches sont écartées.
